# EUROPEAN PATENT SPECIFICATION

(11) **EP 3 351 040 B1**
(45) Date of publication and mention of the grant of the patent: **18.09.2019**
(21) Application number: 16760597.1
(22) Date of filing: 09.08.2016
(51) Int. Cl.: H04W 64/00

(54) **AUGMENTING INDOOR-OUTDOOR DETECTION USING SIDE INFORMATION**
ERWEITERUNG DER INNEN-/AUSSENERKENNUNG MITHILFE VON SEITENINFORMATIONEN
AMÉLIORATION DE LA DÉTECTION INTÉRIEUR-EXTÉRIEUR À L'AIDE D'INFORMATIONS AUXILIAIRES

(30) Priority: 14.09.2015 US 201514853933
(43) Date of publication of application: 25.07.2018
(73) Proprietor: Qualcomm Incorporated, San Diego, CA 92121-1714 (US)
(72) Inventor: SWAMINATHAN, Ashwin, San Diego, California 92121-1714 (US); ZAPPI, Piero, San Diego, California 92121-1714 (US); MAZUELAS, Santiago, San Diego, California 92121-1714 (US); BISAIN, Abhijeet, San Diego, California 92121-1714 (US); SHESHADRI, Suhas, San Diego, California 92121-1714 (US); AKULA, Muralidhar Reddy, San Diego, California 92121-1714 (US); SRIVASTAVA, Aditya Narain, San Diego, California 92121-1714 (US); SADASIVAM, Shankar, San Diego, California 92121-1714 (US)
(74) Representative: Wagner & Geyer
(86) International application number: PCT/US2016/046187
(87) International publication number: WO 2017/048415

(56) References cited:
- US-A1- 2006 167 647
- US-A1- 2014 274 159

## Description

### BACKGROUND

Personal computing devices, such as mobile phones, tablet computers, laptop computers, and other mobile devices are becoming increasingly popular. Information on whether a mobile device is present indoors or outdoors can be used for various applications, and to enhance a user's experience when using a device. For example, indoor/outdoor state information can facilitate a range of applications such as personalization of settings (display, screen brightness, volume, and the like), calendar reminders, gating power-draining location determination, and gating power-draining search for Wireless Local Area Network (WLAN).

Some applications require high-performance indoor/outdoor detection from scarce indoor-outdoor related data. Two such examples are management of Global Positioning System (GPS) signal acquisition by low-power devices such as phones and wearables, and environmental-context-aware home screens in mobile devices. For example, when a mobile device is outdoor, satellite-based GPS can be used for location determination; when a mobile device is indoor, other means such as WiFi access points can be used for location determination. Other applications of high performance indoor/outdoor detection can include context-aided computer vision.

Indoor/Outdoor-related data provided by cost-effective mobile devices is insufficient to enable high-performance applications in the existing state of art. For example, light-based systems are accurate only with daytime, non-concealed device, and clear sky conditions; magnetometer-based systems are accurate only when user is moving; and wireless-signal-strength-based systems are operative only during indoor/outdoor transitions. Conventional methods of indoor/outdoor detection may utilize input from multiple sensors to determine a state of the device. However conventional methods may be inaccurate or may be power intensive. Hence there is a need for accurate, cost-effective indoor/outdoor estimation.

### FIELD

The present disclosure generally relates to indoor/outdoor detection in a mobile device, and more specifically to techniques and systems for detecting an indoor/outdoor state based at least partly on sensor readings and information regarding a location condition. Attention is drawn to US 2014/274159 A1 describing a "Placement Detector" which enables handheld or mobile electronic devices such as phones, media players, tablets, etc., to infer their current position or placement. Placement inference is performed by evaluating one or more sensors associated with the device relative to one or more trained probabilistic models to infer device relative to a user. Example placement inferences include, but are not limited to, inferring whether the device is currently in a user's pocket, in a user's purse (or other carrying bag or backpack), in a closed area such as a drawer or box, in an open area such as on a table, indoors, outdoors, etc. These types of placement inferences facilitate a wide range of automated user-device interactions, including, but not limited to, placement-dependent notifications, placement-dependent responses to various inputs, prevention of inadvertent "pocket dialing," prevention of inadvertent power cycling of devices, lost or misplaced device location assistance, etc.
Attention is further drawn to US 2006/167647 A1 describing methods and systems that determine automatically the likelihood that a device is inside or outside of a structure or building. The system uses one or more sensors to detect ambient conditions, and make the determination. The inference can be used to save power or suppress services from certain devices, which are irrelevant, cannot be used effectively, or do not function under certain circumstances. In support thereof, the system includes one or more context sensors that measure parameters associated probabilistically with the context of a device. A context computing component considers one or more context sensors and facilitates determination of ideal actions, policies, and situations associated with the device. A service provided by the subject invention is the inference from one or more available observations the probability that the device is inside versus outside.

### SUMMARY

In accordance with the present invention a method, a mobile device and a computer readable media, as set forth in the independent claims, respectively, are provided. Preferred embodiments of the invention are described in the dependent claims.

The embodiments and/or examples disclosed in the following description which are not covered by the appended claims are considered as not being part of the present invention. Methods, systems, computer-readable media, and apparatuses for determining an indoor/outdoor state of a mobile device are presented. In some embodiments, such a system or method can include obtaining a sensor reading from a sensor accessible by the mobile device, obtaining contemporaneous information related to local condition associated with an area where the mobile device is located, and selecting an indoor/outdoor detection model to apply from a plurality of trained models. The selection can be based at least in part on the contemporaneous information regarding the local condition. The sensor reading can be provided as input to the selected model. A likelihood that a user of the mobile device is located indoors can be determined based on the selected model. The mobile device can be classified as located indoors or outdoors based on the determined likelihood.

In some embodiments, the determination of the likelihood that the mobile device is located indoors can comprise determining a probability measure that the mobile device is located indoors. The probability measure can be estimated from a probability distribution function.

According to some implementations, the trained models can be developed using at least data collected at the mobile device. In some implementations, the trained models can be updated using data collected at the mobile device. Depending on the implementation, the trained models can be developed at the mobile device, at a server, or at a combination of the mobile device and the server. In embodiments, the trained models can be developed at least in part at a server located in the cloud.

In some embodiments, information regarding the local condition can be expressed as a value chosen from a plurality of possible values. Such values can be discrete values. Each model from the plurality of trained models can be trained specifically for a different value chosen from the plurality of possible values for the local condition. Such trained models can then be updated using data collected at the mobile device.

In some aspects, the information regarding the local condition can comprise a time of day. The time of day can be calculated, for example, with respect to sunrise and sunset times. In some embodiments, the sensor can comprise a gas sensor, and the local condition can include an amount of volatile organic compounds.

In some embodiments, the local condition can include a weather condition, and the sensor can comprise an ambient light sensor (ALS). For example, the weather condition can indicate, for example, the air temperature, humidity, atmospheric pressure, gas composition, wind speed, wind direction, rain, sunrise and sunset times, could coverage, pollen levels, and the like.

In some embodiments, the determining whether the mobile device is indoors can further be based on a determination of a previous indoor/ outdoor state of the device.

### BRIEF DESCRIPTION OF THE DRAWINGS

FIG. 1 is a mobile device comprising various sensors, and an indoor/outdoor detection engine, according to one embodiment.
FIG. 2 is a simplified diagram showing the development of training models according to one embodiment.
FIG. 3 is a simplified diagram showing the classification of indoor/outdoor state according to one embodiment.
FIG. 4 is a flowchart illustrating an example process of indoor/outdoor classification according to one embodiment.
FIG. 5 is a flowchart illustrating an example process of developing and updating indoor/outdoor detection models according to one embodiment.
FIG. 6 is a three-dimensional graphical representation of the number of samples with a given ALS reading as a function of the ALS reading and time from sunrise or sunset, according to one embodiment.
FIG. 7 is a graphical representation of examples of indoor and outdoor probability distribution functions from trained models, one for sunny weather, and the other for cloudy weather, according to one embodiment.
FIG. 8 is a graphical representation of examples of indoor and outdoor probability distribution functions from trained models, at various times relative to sunset, according to one embodiment.
FIG. 9 is a graphical illustration of an example of the use of prior information in indoor/outdoor determination.

### DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the invention. However, it will be apparent that various embodiments may be practiced without these specific details. The figures and description are not intended to be restrictive.

The ensuing description provides exemplary embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the scope of the invention as set forth in the appended claims.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

Furthermore, embodiments may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks.

Systems and methods of detecting whether a mobile device is located indoors or outdoors can involve obtaining one or more readings from sensors present on the mobile device. Both low power sensors and high power sensors can be used for the detection, depending on the situation. Low power sensors may be advantageously utilized in situations where there is a need to continuously monitor whether a mobile device is indoors or outdoors. High power sensors can be utilized, for example, when low power sensors are not able to provide a reliable determination, or when an accurate determination is required.

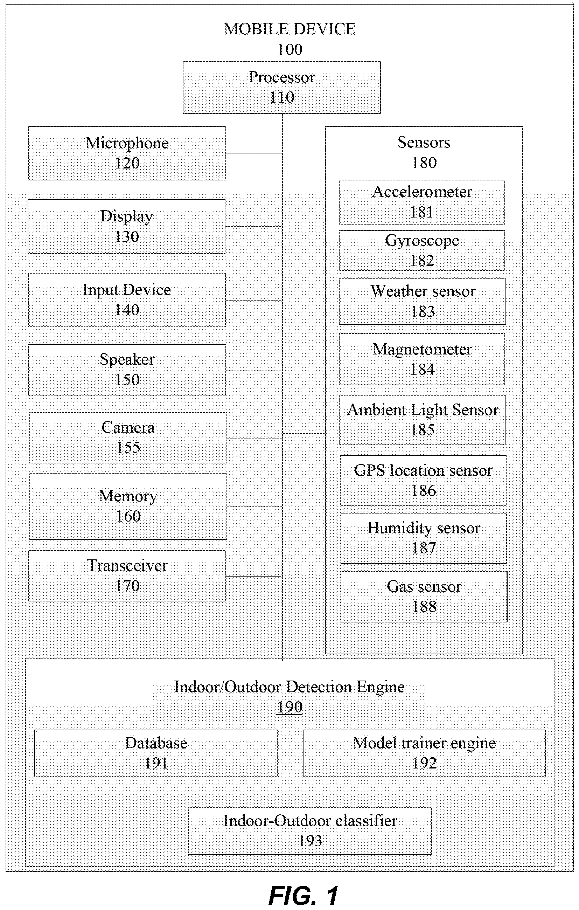

FIG. 1 is a block diagram illustrating components of an example mobile device according to one embodiment. One of ordinary skill in the art will appreciate that the hardware configuration of mobile device 100 shown in FIG. 1 is an example, and that the mobile device 100 is not limited to the hardware configuration depicted, or any particular hardware configuration.

As shown in FIG. 1, mobile device 100 comprises a processor 110. Processor 110 can be configured to execute instructions stored on a computer readable medium to perform various methods according to embodiments. Device 100 can also comprise a computer readable medium with a software application stored on the medium. Mobile device 100 can also comprise a video capture device such as camera 155, a microphone 120, a speaker 150, an input device 140, and a display 130. As shown, mobile device 100 also comprises memory 160. Memory 160 can be non-volatile storage (e.g., a hard-disk drive (HDD) a solid-state drive (SSD), or other suitable non-volatile storage), a memory card (e.g., an SD card, a MicroSD card, a MultiMediaCard (MMC), a CompactFash card, or the like), or other suitable storage medium. In some embodiments, the memory 160 can store data relevant to indoor/outdoor detection and can be accessible by indoor/outdoor detection engine 190, which will be described below.

As shown in FIG. 1, mobile device 100 comprises transceiver 170 that can be used to wirelessly transmit and receive data over a network. Examples of such a network can include a cellular network(such as CDMA, GSM, or LTE), WiFi, Bluetooth™, Zigbee™, or other suitable commercial or proprietary wireless technology. In some embodiments, transceiver 170 can be used to obtain information related to a local condition associated with an area where the mobile device 100 is located from the network.

Mobile device 100 can also include or have access to one or more sensors 180. As used herein, a sensor includes a location sensor or a position locator (e.g., a Global Positioning System (GPS) sensor, an Estimote sensor, a location Beacon, an iBeacon sensor, or other suitable location sensor), an altimeter, a gyroscope, a magnetometer, an impact sensor, an accelerometer, an infra-red sensor, an ambient light sensor, a motion sensor, a gesture sensor, a temperature sensor or thermometer, or any other suitable sensor.

As shown in FIG. 1, mobile device 100 comprises an accelerometer 181. Accelerometer 181 can be used to measure acceleration of the mobile device 100. The accelerometer may include a single-axis or a multi-axis accelerometer, and can be used to detect a magnitude and a direction of the measured acceleration as a vector quantity. Input received from the accelerometer can be used to determine, for example, when a user begins to move from rest, or when a user comes to a stop.

As shown, mobile device 100 comprises a gyroscope or oscilloscope 182. The gyroscope can be used to measure the orientation, and hence rotation of the mobile device 100. Magnetometer 184 can be used to measure the strength and direction a magnetic field at or surrounding the mobile device 100. Magnetometer 184 can be based on several physical principles such as the Hall Effect, magnetic tunneling, anisotropic magnetoresistance, or Lorentz force measurements.

As shown in FIG. 1, mobile device 100 also comprises weather sensor 183. In some embodiments, weather sensor 183 may further comprise a thermometer to measure a temperature of the atmosphere surrounding the mobile device, and/or an atmospheric pressure sensor to measure atmospheric pressure.

Mobile device 100 can also comprise Ambient Light Sensor (ALS) 185. The ALS can measure the amount of light falling on the sensor, and hence the brightness of an area surrounding the mobile device 100. For example, the ALS could be a photodetector which detects the presence of photons. In this way, the ALS may simulate how the human eye perceives an environment as being "bright" or "dark."

As shown in FIG. 1, mobile device 100 can also include a GPS location sensor 286. Mobile device 100 can use GPS location sensor 286 to determine a set of global location coordinates for the mobile device 100, utilizing, for example, signals from satellites. The GPS location sensor 186 can be used to determine location information, on a map, of the mobile device 100. Such location information can include a city, state, country, street address, and/or postal code of the location of the mobile device. In some embodiments, mobile device 100 can include other triangulation or trilateration location sensors in addition to or instead of a GPS location sensor. For example, other Satellite Positioning Systems can include Assisted GPS (AGPS) systems.

Mobile device 100 can also include a humidity sensor 187. Humidity sensor 187 can be used to measure the amount of humidity, for example, as a fraction or a percentage, in the atmosphere. Mobile device 100 can also include a gas sensor 188. Gas sensor 188 can detect levels of certain gases in the air surrounding the sensor. For example, gas sensor 188 can detect the percentage of ozone, nitrogen oxides, carbon monoxide, or volatile organic compounds in the surrounding air. Mobile device 100 can also include other sensors that are not shown in FIG. 1. Examples of such sensors includes proximity sensor, impact sensor, gesture sensor, and the like.

As shown in FIG. 1, mobile device 100 comprises indoor/outdoor detection engine 190. The indoor/outdoor detection engine 190 may include its own processors, or the indoor/outdoor detection engine 190 may use the processing capability of processor 110. In some embodiments, as shown in mobile device 100, the indoor/outdoor detection engine can include a database 191, a model trainer engine 192, and an indoor/outdoor classifier 193. In some embodiments, indoor/outdoor detection engine 190 may include all, some, or none of the database 191, model trainer engine 192, and indoor/outdoor classification engine 193. The database 191, model trainer 192, and classification engine 193 will be described further below. The IOD engine can be configured to receive input from transceiver 170, sensors 180, and output a detected indoor/outdoor state of mobile device 100.

In some embodiments, a sensor that mobile device 100 has access to, such as from the suite of sensors 180, can be used individually by the indoor/outdoor detection engine 190 to detect an indoor/outdoor state of mobile device 100. As shown in FIG. 1, the suite of sensors 180 is located in the mobile device 100. However, in other embodiments, sensors 180 can be proximate to but separated physically from mobile device 100.

In some examples, Ambient Light Sensor (ALS) 185 reading can be used to predict whether a mobile device is indoors or outdoors. High readings from an ALS may be indicative of the mobile device being outdoors, because light intensity inside buildings is typically lower than outdoor light intensity on a sunny day. In other examples, received signal strength of a cellular signal, for example at transceiver 170, may be used to detect whether a mobile device is present indoors or outdoors. In yet another example, a reading from a magnetometer, which measures the amount of magnetic field in an environment, can be used for indoor/outdoor detection. While outdoors, the earth's magnetic field can dominate the magnetometer reading, whereas indoors the magnetometer reading could be affected by various electrical appliances and structures.

In some embodiments, the gas sensor 188 can be used to detect the indoor/outdoor state of the mobile device. For example, if the gas sensor indicates higher levels of gases such as ozone, nitrogen oxides, or carbon monoxide, the mobile device is more likely to be outdoors, because such gases are typically found outdoors. If the gas sensor indicates higher volatile organic compounds, the mobile device is more likely to be indoors. Volatile organic compounds are chemical that have a high vapor pressure at room temperature. They can be present at high levels in household products including paints, wood preservatives, aerosol sprays, cleansers, disinfectants, air fresheners, and automotive products.

Indoor/outdoor detection based on a single sensor reading can suffer from several limitations. For example, ALS based detection may not be available or accurate at night time or on cloudy days. In some embodiments, a plurality of sensors may be used in combination with each other to improve the accuracy of indoor/outdoor detection. For example, based on the fact that the earth's magnetic field may not be influenced greatly outdoors, reading from accelerometer 181 can be used in conjunction with the magnetometer reading to detect an indoor/outdoor state of mobile device 100. The accelerometer measures the amount of acceleration of the mobile device, and can hence detect most kinds of motion. When motion is detected by the accelerometer, several readings from the magnetometer may be measured. Low variability in the magnetometer readings during motion can indicate that the mobile device is outdoors. Whereas, the earth's magnetic field may be influenced significantly indoors by various appliances and structures. Hence detection of motion in conjunction with a high variability in magnetometer measurement may indicate that the mobile device is indoors.

In some embodiments, readings from gyroscope 182 can be used in conjunction with readings from magnetometer 184 to detect and indoor/outdoor state. The gyroscope can measure changes in rotation of the mobile device. For example, high variability in magnetometer readings in combination with a low variability in gyroscope may indicate that the mobile device is indoors. Such a situation indicates that the mobile device is relatively stationary while the magnetic field around it is variable - a situation much more likely while indoors because of magnetic interference from objects and appliances.

Indoor/outdoor detection from multiple sensors can be based on intelligently combining readings based on physical realities behind the sensor readings, such as in the examples shown above. In other examples, readings from multiple sensors can also be used as a validation mechanism to improve reliability of an indoor/outdoor detection.

In some embodiments, readings from sensors located in the mobile device can be augmented with other data. In some examples, such data may be available locally in a memory of the mobile device. In some embodiments, such data can be obtained contemporaneously with the sensor readings from a source external to the mobile device through a network. In some embodiments, such data may be related to a local condition such as a weather condition.

For example, local humidity data obtained from a weather station over a network can be used contemporaneously with a humidity sensor reading from sensor 187. The local humidity data can provide an expected value for measured humidity when the mobile device is outdoors. Hence, a significant mismatch between the humidity value as measured by the sensor and the expected humidity value from the obtained data can indicate that the mobile device is indoors. Likewise, temperature measured by a sensor on the mobile device such as weather sensor 183 can be compared to the temperature obtained from the network for a geographic area where the mobile device is located. A close match may indicate that the mobile device is located outdoors.

As another example, local weather data regarding cloud cover can be used in conjunction with a reading from the ALS 185. When the obtained weather information indicates sunny weather for the area where the mobile device is located, and the ALS reading indicates low light value, an inference can be made that the mobile device 100 is located indoors.

Returning to FIG. 1, in the embodiment illustrated, indoor/outdoor detection (IOD) engine 190 comprises database 191, model trainer engine 192, and indoor/outdoor classifier 193. As shown in the figure, the IOD engine can be used in conjunction with machine learning models according to embodiments. Database 191 can be used to store at least a trained IOD model. In some embodiments, database 191 can store a plurality of trained models. Database 191 can comprise non-volatile memory. Model trainer engine 192 can comprise instructions stored in a computer readable medium and one or more processors configured to execute stored instructions. Indoor/outdoor classifier 193 can comprise instructions stored in a computer readable medium and one or more processors configured to execute stored instructions.

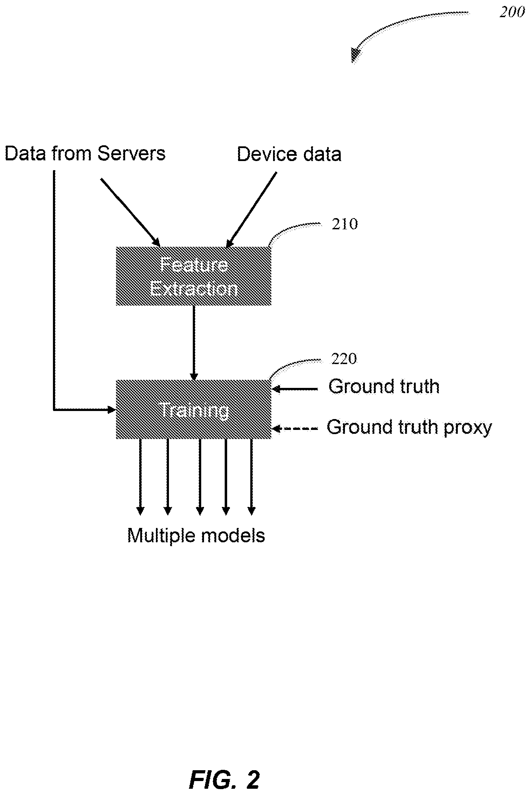

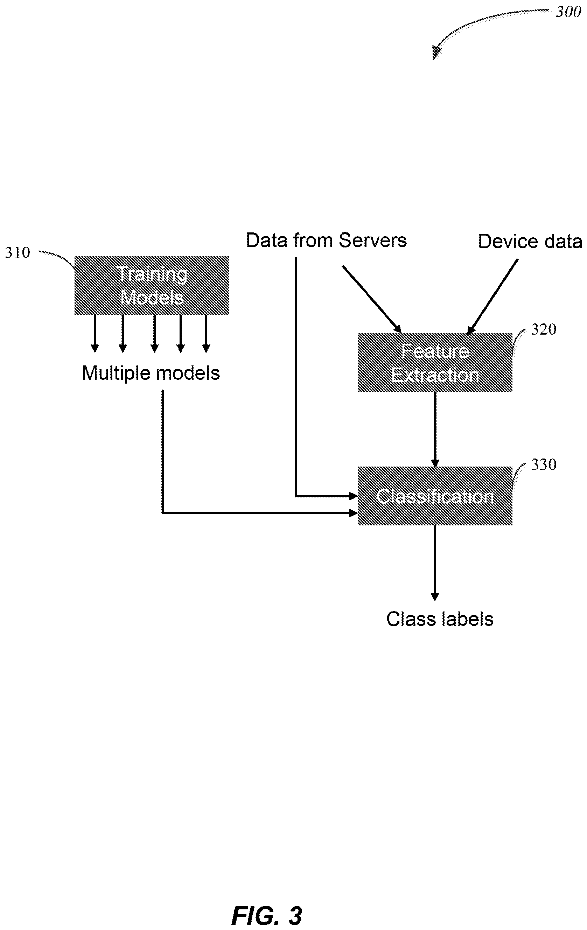

IOD engine 190 can be used to implement methods according to embodiments, including selecting and applying machine learning models. Examples of developing and applying machine learning models will be explained further with reference to FIG. 2 and FIG. 3.

FIG. 2 is a simplified diagram showing the development of training models according to one embodiment. Process 200 is an example of development of one trained model from a plurality of trained models. According to embodiments, each trained model can be trained specifically for a value chosen from a plurality of possible values for a local condition. For example, the local condition could comprise a weather code, and/or time before sunset. As a simple non-limiting example, the weather code could represent whether it is sunny or cloudy. Time before sunset could be categorized as (i) within half an hour of sunset; (ii) between half an hour and an hour of sunset; and (iii) beyond an hour of sunset. Hence, in the above example, trained models could be developed for six separate scenarios: each case of time before sunset for sunny weather and for cloudy weather.

As shown in FIG. 2, process 200 can be used to develop a model for a value of the local condition. At block 210, features can be extracted from obtained data. Data can be obtained from various sources such as from a source external to the mobile device, for example, a server. Alternatively, or in addition, data can be obtained from a mobile device, for example, from sensors on the mobile device in the form of sensor readings. At step 210, a subset of the most relevant predictors or variables can be selected to form a feature vector. In some examples, methods such as Principal Component Analysis (PCA) or Linear Discriminatory Analysis (LDA) can be applied for feature extraction. A feature vector can be created by one or more statistics collected from the available data. Some example of elements for a feature vector for IOD can include logarithm of the average light intensity over the last second, average intensity of the magnetic field over the last second, standard deviation of the magnetic field intensity over the last second, direction of the magnetic field vector, current angular velocity measured from the gyroscope, time of the day, output of the proximity sensor, local temperature/humidity/pressure, average acceleration, standard deviation of the acceleration, and average temperature/humidity/pressure from neighboring weather stations. In general, the output value from a sensor or from a remote server and the result of analysis on such data (including threshold analysis, complex data processing, and the like) can be used as features. In some example, the difference between the values of measurements obtained from the server and from the device can be used as features.

In some embodiments, device data used for the feature extraction can include sensor reading from one or more sensors, such as sensors 180 described previously. Data used for the feature extraction can also include other sources, which, as illustrated in FIG. 2, includes data from servers. Data from servers can include information related to a local condition such as a weather condition at a given point or period of time. The server can be located at, or obtain data from, a weather service, webpage, or news article from a network. In some embodiments, weather related data can be obtained from the server for the geographic area (for example, the ZIP code) where the mobile device is located. The geographic area where the mobile device is located can be detected by the mobile device using numerous approaches. For example, the mobile device might obtain its location from a GPS sensor reading. As another example, the mobile device can estimate its location based on IP addresses of nearby WiFi hotspots. Based on the geographic area where it is located, the mobile device can retrieve weather information for that area from the server via a network.

Weather information obtained from a server for a given location can include variables such as cloud cover, sunset/sunrise times, temperature (current, minimum for the day, maximum for the day), humidity, atmospheric pressure, pollen content, wind speed, wind direction, rain, and the like. The overall weather condition can also be expressed as a weather code. In one example, 72 codes can be used to denote various weather conditions. In that example, sunny , few clouds , moderate rain , etc. may have separate codes.

At block 220, training can occur using data obtained in block 210. Input for the training process can include, for example, a feature vector obtained at the conclusion of block 210. Input to block 220 can also include data from an external source, such as a server, that has not undergone a feature extraction step. Further, input to block 220 can include ground truth information, or ground truth information proxy for training.

Ground truth information, used for training, can represent known indoor/outdoor states of a device. For example, during training, a user can enter ground truth information as to whether the mobile device is located indoors or outdoors. In some embodiments, process 200 can occur at a location physically removed from the mobile device, such as a development server. While developing training models at a development server, mobile devices with sensors similar to mobile device 100 can be used for the training. Developed trained models can be stored in a memory of mobile device 100. In some embodiments, process 200 can occur at mobile device 100. In such embodiments, trained models can be developed at the mobile device 100 using data obtained from its sensors and externally obtained information using ground truth and/or ground truth proxies. Ground truth proxies will be explained further below.

In some embodiments, training can be performed separately for specific values of a local condition. For example, training can be performed separately for each weather code. As one example, training can be performed separately for sunny weather and for cloudy weather.

In some embodiments, the trained models can be updated continually as the mobile device is being used for IOD. In such embodiments, sensor readings from the sensors on the mobile device can be used with information related to a local condition, obtained as data from servers, to update the trained models resident on the mobile device 100. In some embodiments, ground truth proxies can be used for updating the trained models.

Ground truth proxies can represent scenarios where it can be determined to a sufficient degree of accuracy that the mobile device is outdoors. For example, accelerometer readings can be used to detect that the mobile device is moving at a high speed, thereby leading to the inference that the mobile device is outdoors. As another example, if the mobile device can detect a very high value of lux reading from the ambient sensor, such as a reading 10,000 lux, it is most likely outdoor. As a further example, if the mobile device can detect several GPS satellites, it is most likely outdoors. During use, the mobile device 100 can obtain various other sensors' readings during a time when a ground truth proxy can be deduced, and feed the sensor readings back to the trained models for them to be updated. Contemporaneously, information regarding a local condition, in some examples the local weather condition, can be fed into the trained model as input for updating the trained models. In a sense, data from the mobile device, during its use, can be used for "online learning" and updating of the trained models.

A further example of a ground truth proxy can include detection of a presence of devices in the vicinity of a mobile device. For instance, a Bluetooth signal that can be ascertained as a signal of a printer, can imply that the mobile device is situated near a printer, and hence likely located indoors. On the other hand, a Bluetooth signal that can be ascertained as a signal of a car, can imply that the mobile device is situated near a car, and hence likely located outdoors. Detection of a plurality of Bluetooth devices near the mobile device can indicate that the mobile device is likely to be indoors. Geo-fencing algorithms can also be used to determine whether a mobile device is inside a particular region such as a mall, building, or office, and hence classified as indoor or outdoor.

In some embodiments, process 200 can be developed or updated through crowd-sourcing. In such embodiments, sensor readings and data from various mobile devices can be used to develop or update the trained IOD models.

An output from the process 200 can be various IOD models for specific values of a local condition. For example, output from block 220 can be a plurality of IOD models, one for each value of weather codes. The IOD model can be used to determine a likelihood that the mobile device is indoors. In some embodiments, an IOD model can comprise a probability distribution function indicating the probability that a mobile device is indoors for the particular value of local condition, for a varying level of sensor reading. Hence, the probability distribution function can be used to determine the probability that a mobile device is located indoors for a given value of a sensor reading.

FIG. 3 is a simplified diagram showing the application of training models to classify a mobile device as indoors or outdoors according to one embodiment. Block 310 shows the available trained IOD models. The IOD models of block 310 can be developed using a training process such as process 200 described with reference to FIG. 2. Several trained IOD models can be available, in some examples, one for each value of a local condition.

At block 320, feature extraction can be performed on data obtained from the device and external data obtained from servers. At step 320, a subset of the most relevant predictors or variables can be selected to form a feature vector. A feature vector can be created by one or more statistics collected from the available data. Some example of elements for a feature vector for IOD can include logarithm of the average light intensity over the last second, average intensity of the magnetic field over the last second, standard deviation of the magnetic field intensity over the last second, direction of the magnetic field vector, current angular velocity measured from the gyroscope, time of the day, output of the proximity sensor, local temperature/humidity/pressure, average acceleration, standard deviation of the acceleration, and average temperature/humidity/pressure from neighboring weather stations. In general, the output value from a sensor or from a remote server and the result of analysis on such data (including threshold analysis, complex data processing, and the like) can be used as features. In some example, the difference between the values of measurements obtained from the server and from the device can be used as features. In some examples, methods such as Principal Component Analysis (PCA) or Linear Discriminatory Analysis (LDA) can be applied for feature extraction.

In some embodiments, device data used for the feature extraction can include sensor reading from one or more sensors, such as sensors 180 described previously. Data used for the feature extraction can also include other sources, which, as illustrated in FIG. 3, includes data from servers. Data from servers can include information related to a local condition such as a weather condition at a given point of time. The server can be located at, or obtain data from, a weather service, webpage, or news article from a network. In some embodiments, weather related data can be obtained from the server for the geographic area (for example, the ZIP code) where the mobile device is located. The geographic area where the mobile device is located can be detected by the mobile device using numerous approaches. For example, the mobile device might obtain its location from a GPS sensor reading. As another example, the mobile device can estimate its location based on IP addresses of nearby WiFi hotspots. Based on the geographic area where it is located, the mobile device can retrieve weather information for that area from the server via a network. Such information related to a local condition can be obtained contemporaneously with a sensor reading.

At block 330, process 300 comprises classification of the mobile device as indoors or outdoors. From the plurality of training models in block 310, the relevant model can be selected based on information about a local condition, which can be provided as input at block 330. For example, if data from servers indicate that the weather in an area where the mobile device is located is sunny, the IOD model applicable for sunny weather can be selected. Further examples will be described below.

Device data provided as input to the classification can include one or more sensor readings. The selected IOD model can be used to estimate a probability that the mobile device is indoors for the given value of the sensor reading. Based on the obtained probability, the mobile device can be assigned a 'class label' - of whether the mobile device is detected to be indoors or outdoors.

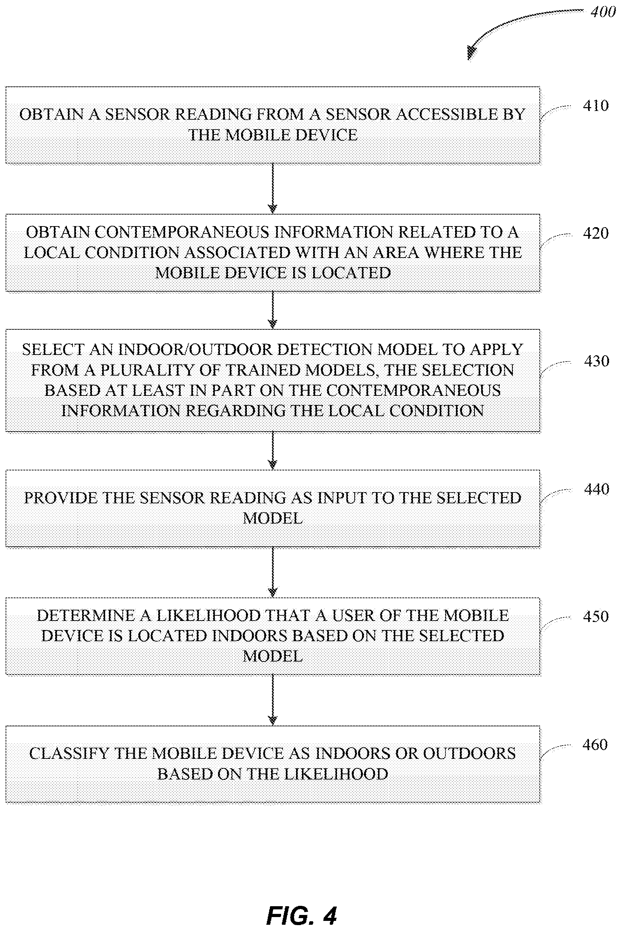

FIG. 4 depicts a flowchart illustrating an example process 400 of indoor/outdoor detection according to one embodiment. The process 400 can be performed by the IOD engine 190. IOD engine 190 can comprise one or more processors to perform steps of process 400. In some embodiments, processor 110 can provide processing capability for IOD engine 190 in place of or in addition to IOD engine 190's own processors.

At block 410, process 400 includes obtaining one or more sensor readings from one or more sensors accessible by the mobile device. In some embodiments, the IOD engine 190 can obtain a reading from one or more sensors from the suite of sensors 180. Although sensors 180 are shown to be located physically within mobile device 100, in some embodiments, sensors 180 can be physically removed from the mobile device. For example, sensors may be physically located in a wearable device, which can be coupled to mobile device 100.

At block 420, process 400 includes obtaining contemporaneous information related to a local condition associated with an area where the mobile device is located. In implementations, the IOD engine can obtain such information. In some embodiments, step 420 can involve retrieving information from a wireless network. Communication apparatus connected to the IOD engine, such as transceiver 170 can be used to communicate with a server that is connected to the mobile device via a network such as a Local Area Network (LAN), a Wide Area Network (WAN), Internet, and the like. The network can utilize technology such as cellular including GSM, CDMA, LTE, or other technology such as WiFi, Bluetooth, and WiMax. Examples of local conditions can include weather information for a certain geographic area, gas composition information in the atmosphere of a geographic area, sunrise and/or sunset times for the geographic area. Servers can include servers belonging to news agencies, weather stations, laboratories, universities, and the like. In some examples, a local area can represent a postal code such as a ZIP code.

In implementations, information related to a local condition can be obtained from a device connected to the Internet of Things. In implementations, such information can be obtained from other mobile devices through crowd sourcing. Under a crow sourcing model, a cellular network manager could track sensor readings from a number of mobile devices located within a geographic area to estimate the value of the location condition for that area.

Obtaining information related to a local condition can occur contemporaneously with obtaining a sensor reading. Contemporaneously in this context can refer to the information regarding the local condition that is exists or is expected to exist around the time the sensor reading is obtained. For example, the information regarding the local condition can be retrieved within seconds, minutes, or hours of obtaining the sensor reading. Alternatively, the information regarding the local condition can be retrieved at a different time but the local condition is expected to exist within seconds, minutes, or hour of the time when the sensor reading is obtained. For instance, while the content of a weather forecast (example of local condition information) may predict weather conditions that is expected to exist within seconds, minutes, hours, etc., of the time when the sensor reading is obtained, the weather forecast itself may be retrieved at a time prior to when the sensor reading is obtained. The information related to a local condition can also be variable and valid only for a limited period of time, including for the period of time when the sensor reading is obtained. For example, when weather information is retrieved, part of the retrieved information can be the temperature of the ZIP code where the mobile device is located, for the period of time when the sensor reading is obtained. In implementations, information regarding a plurality of conditions for a location can be obtained.

At block 430, process 400 includes selecting an indoor/outdoor detection model to apply from a plurality of trained models. The selection can be based, at least in part, on the contemporaneous information regarding the local condition. In implementations, steps in block 430 can be performed by components of the IOD engine 190 of the mobile device 100. Database 191 can store a plurality of trained IOD models developed using flows such as process 200. Each of the trained IOD models stored in database 191 can be applicable for a value of the information regarding the local condition. In embodiments, information regarding the local condition can be categorized into a plurality of possible values.

By way of a non-limiting example, information regarding the local condition can refer to a weather condition, in one case, the percentage atmospheric humidity. The percentage humidity can be categorized into three possible values: low humidity, normal humidity, and high humidity. Three separate trained models can be developed: one for low humidity, one for normal humidity, and one for high humidity. As another example, separate trained models can be developed for each weather code. In embodiments, the IOD model applicable to the value of the information regarding the local condition can be selected. For example, if the weather code obtained corresponds to sunny, the sunny model can be selected.

In some embodiments, the trained models can be developed using data collected at the mobile device. In some embodiments, the trained models can be updated using data collected at the mobile device. In some embodiments, the trained models can also be developed at the mobile device. In implementations, the trained models can be developed, at least in part, at a server.

At block 440, process 400 includes providing the sensor reading as input to the selected model. In some implementations, the IOD engine 190 can be provided with data from the sensor reading. As will be explained later with reference to an example, the selected IOD model can provide a probability distribution function of the probability of the mobile device being located indoors as a function of the sensor reading. In implementations, the probability of the mobile device being located indoors can be provided as a function of more than one sensor reading and/or information regarding the local condition.

At block 450, process 400 includes determining a likelihood that a user of the mobile device is located indoors. Such a determination can be based on the selected model. For example, the likelihood can be calculated from the probability distribution function by determining the probability for the reading obtained from the sensor. In other implementations, the reading obtained from the sensor can be corrected or manipulated before being input to the IOD model. In implementations, other measures can be used to determine a likelihood that the mobile device is located indoors such as a percentage or other function.

The probability of the mobile device being located outdoors can be determined using conditional probabilities and probability statistics theory. As an example, for a case involving a lux value from an ALS as the sensor reading and cloud cover information regarding the location condition, the probability of the mobile device being outdoors for the given lux value and cloud cover can be expressed in terms of the probability of being outdoors, the probability of obtaining that particular lux value, and the probability of obtaining that particular lux value for that cloud cover given the mobile device is outdoors, using conditional probabilities:

P (Outdoor | Lux, Weather) = [P(Outdoor) x P (Lux | Outdoor, Weather)]/ P(Lux), where Outdoor represents the mobile device being located outdoors, Lux represents the reading from an ALS sensor, and Weather represents the cloud cover. The example is non-limiting and can be applicable to several sensor readings and several pieces of information regarding a local condition. Although the example shown above is applicable for one sensor reading and one piece of information regarding a local condition, more input data from a plurality of sensors and/or a plurality of pieces of information regarding a local condition can be used in implementations.

In the example equation above, probabilities on the right hand side of the equation can be estimated using various approaches. For example, the probability that a person is present outdoors can be estimated based on his or her daily activities. On a week day, during work hours, the probability of outdoors may be low. The probability of a certain lux value can be estimated based on the geographic location (latitude), time of the year, etc. Using the formulation above based on conditional probabilities, the decision on whether the mobile device is located indoors or outdoors can be formulated as a machine learning problem. Decisions on indoor/outdoor state can be made based on comparing the probabilities to threshold values. Probability distribution functions, which indicate the probability that the mobile device is located indoors (or outdoors) as the lux values vary, can thus be developed for various values of cloud cover, such as sunny and cloudy.

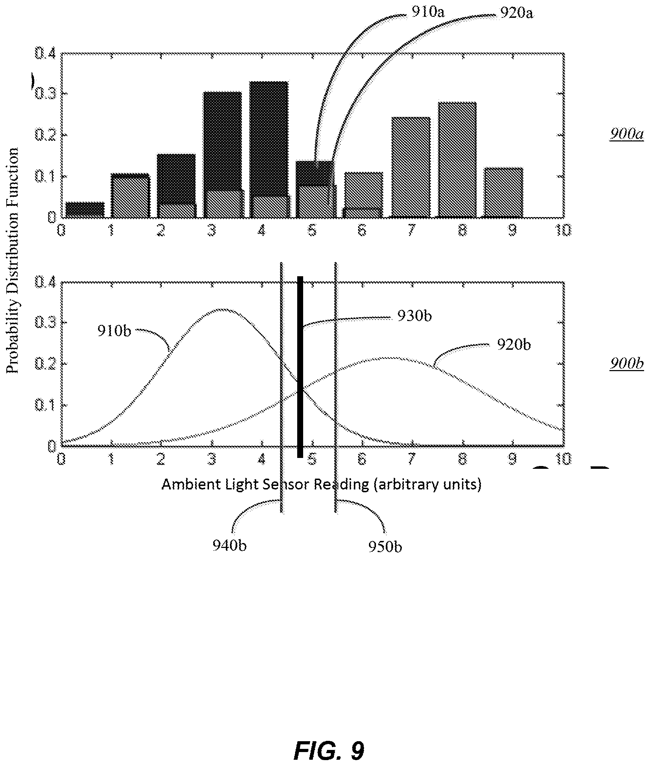

At block 450, process 400 includes classifying the mobile device as indoors or outdoors based on the likelihood. For example, in one implementation, IOD classifier 193 can classify the mobile device as located indoors if the probability as measured using the selected IOD model for the sensor reading is over a certain number, such as 0.5. As another example, for a given value of the sensor reading, the probability of the mobile device being located indoors can be compared with the probability of the mobile device being located outdoors. The mobile device can be classified as indoors or outdoors based on the comparison. In other implementations, the classification can depend on factors apart from the determined probability, such as a previous determination of the indoor/outdoor state of the device. Classification taking into account prior history will be explained below with reference to FIG. 9.

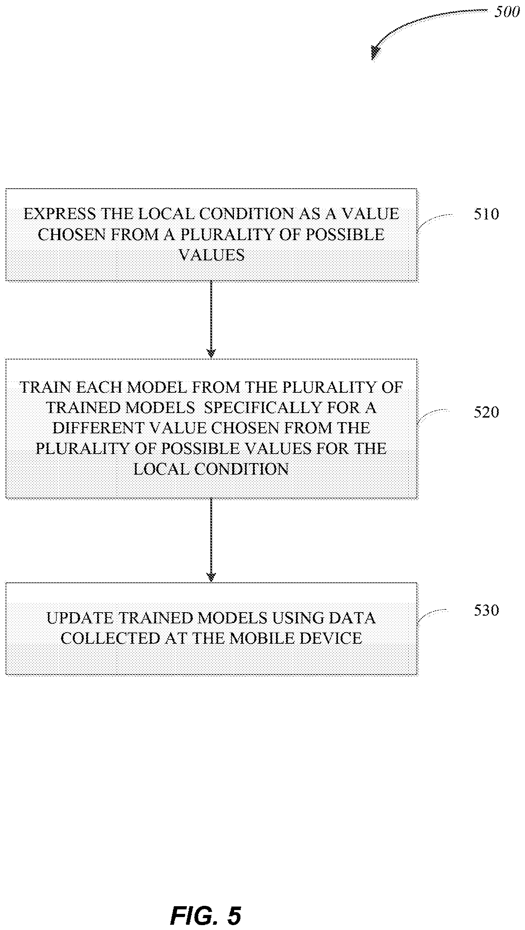

FIG. 5 depicts a flowchart illustrating an example process 500 according to one embodiment. At block 510, process 500 includes expressing the obtained local condition as a value chosen from a plurality of possible values. One example was provided earlier where the obtained local condition includes atmospheric humidity. At block 520, process 500 includes training each model from the plurality of trained models specifically for a different value chosen from the plurality of possible values for the local condition. In implementations, training can occur at a server. In other implementations, training can occur at the mobile device.

At block 530, process 500 includes updating trained models using data collected at the mobile device. In implementations, model trainer engine 192 of IOD engine 190 can be used for updating trained models. Once example of a method of using device data to update training models was explained earlier with reference to FIG. 2 using ground truth proxies. Updated models can be stored at the mobile device 100, for example in databased 191. Alternatively or in addition, updated models can be communicated via a network to a server. Such continual learning using data from the mobile device is sometimes referred to as "online learning."

Examples of IOD classification will now be explained using two kinds of local conditions: time from sunrise/sunset and weather code. Sunrise/sunset times for a given area are generally made available by various weather networks and are data that can be retrieved from the Internet by mobile device 100. Similarly, weather code (for simplicity sunny or cloudy) is also generally available weather data. For illustration, the ambient light sensor (ALS) will be used as an example of the sensor. However, a person skilled in the art will understand and appreciate that the examples are meant to be non-limiting, and that embodiments of the invention can be practiced with several combinations of information related to a local condition and sensor readings.

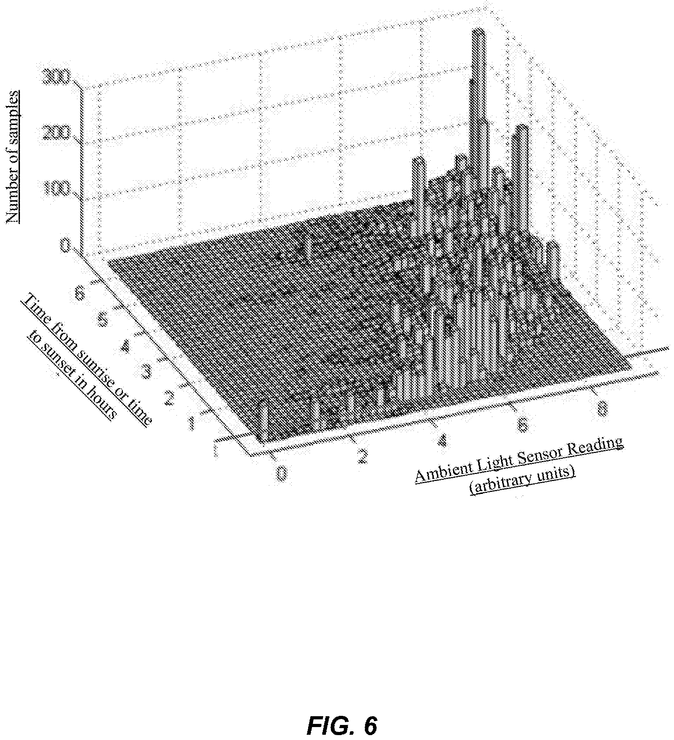

FIG. 6 is a three-dimensional graphical representation of the number of samples with a given ALS reading as a function of the ALS reading and time from sunrise or sunset. The X-axis represents the ALS reading in an arbitrary unit. It could be, for example, the logarithm of a lux value, or any other unit indicative of brightness. In the scale shown, values of over 9, for example, may be found on bright sunny days. The Y-axis represents either time from sunrise or time to sunset. For simplicity of explanation, the Y-axis will hereafter be referred to as time to sunset in the following paragraphs, although it could equally represent the time from sunrise. The Z-axis represents the number of samples exhibiting a given combination of time to sunset and ALS reading. The taller a bar in FIG. 6, the higher the probability of obtaining that value of ALS reading at that time to sunset.

From the example shown in FIG. 6, it can be deduced that higher ALS reading are obtained generally at greater times from sunset until mid-day, assuming equal days and nights. In the example shown, the highest ALS readings are typically obtained 6 hours from sunset. FIG. 6 also suggests that most change in ALS readings occur during a small window of time, approximately an hour from sunset. During this time period, indoor/outdoor detection could be prone to a higher error rate when based on ALS readings. It could be useful to categorize time to sunset into three distinct values: (i) sunset to 0.5 hours before sunset, (ii) 0.5 hours before sunset to 1 hour before sunset, and (iii) daytime (more than 1 hour before sunset) to focus on a short period of time surrounding sunset.

Based on the three values for time to sunset, separate models: (i), (ii), and (ii) can be created for each value described above. One of the three models can be applicable for each time of the day. For example, if the indoor/outdoor state needs to be determined a few minutes before sunset, model (i) would be applicable.

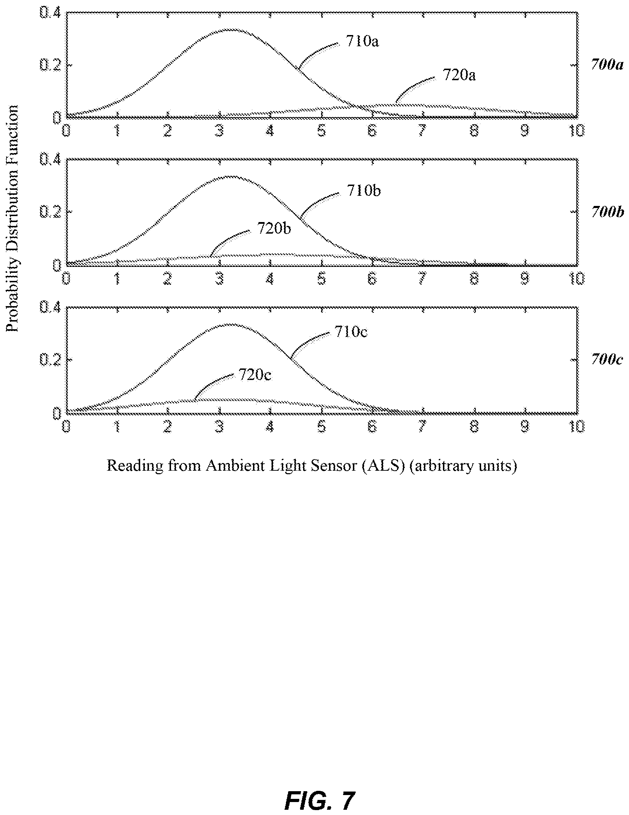

FIG. 7 illustrates the probability distribution function of the mobile device being located indoors and the probability distribution function of the mobile device being located outdoors, for three values of time to sunset. Time to sunset effectively corresponds to time of the day.

Plot 700a corresponds to day-time, i.e. model (iii), or greater than one hour from sunset. Distribution 710a represents the probability that a mobile device is indoors during daytime as a function of the ALS reading. As evident from distribution 710a, an ALS reading of approximately 3.1-3.2 corresponds to the highest probability of being indoors. The probability of being indoors falls off for higher and lower values of ALS reading. Distribution 720a represents the probability that a mobile device is located outdoors as a function of the ALS reading. The probability distribution for outdoors peaks at an ALS reading of approximately 6.5. The probability falls off for higher and lower readings of the ALS, but more gently than in the indoors case.

As shown in plot 700a, for a given ALS reading, for a given model, there exist two probabilities - one probability of the mobile device being located indoors, and another probability of the mobile device being located outdoors. The two can be compared in making a classification of the mobile device as indoors or outdoors. In some implementations, the mobile device could be classified as indoors simply based on the indoor probability being higher than the outdoor probability for that reading of ALS. In other implementations, other factors besides the indoor and outdoor probabilities can be used for the classification.

Plot 700b corresponds to the time period between an hour to sunset and half-an-hour to sunset (model (ii)). Distribution 710b represents the probability that a mobile device is indoors as a function of the ALS reading for this time of day. An ALS reading of approximately 3.1-3.2 again corresponds to the highest probability of being indoors, perhaps because indoor lighting is not affected significantly by the sun. The probability of being indoors falls off for higher and lower values of ALS reading. Distribution 720b represents the probability that a mobile device is located outdoors as a function of the ALS reading. The probability distribution for outdoors peaks at an ALS reading of approximately 4.1. The probability falls off for higher and lower readings of the ALS, but more gently than in the indoors case. The peak probability for the outdoors case shifts significantly to lower ALS readings as we get closer to sunset.

Plot 700c corresponds to the time period between half-an-hour to sunset and sunset (model (i)). Distribution 710c represents the probability that a mobile device is indoors as a function of the ALS reading for this time of day. An ALS reading of approximately 3.1-3.2 still corresponds to the highest probability of being indoors. The probability of being indoors falls off for higher and lower values of ALS reading. Distribution 720c represents the probability that a mobile device is located outdoors as a function of the ALS reading. The probability distribution for outdoors peaks at an ALS reading of approximately 3.1. The probability falls off for higher and lower readings of the ALS, but more gently than in the indoors case. Very close to sunset, IOD detection, especially detection of a mobile device as outdoors, based on ALS reading is prone to high error rates. The probability of the mobile device being indoors and outdoors peak at approximately the same value of ALS reading.

In some aspects, ALS readings could also be affected by another local condition such as the weather code. For simplicity of explanation, the weather code can be categorized as sunny or cloudy, although there could be several values for weather code. Each of the models explained above with reference to time to sunset can be developed, refined, or subdivided for sunny weather and for cloudy weather.

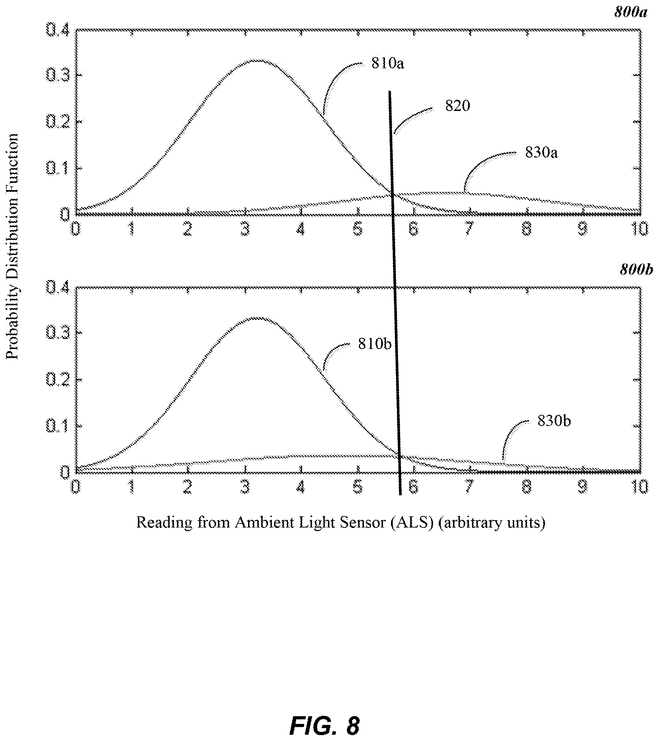

FIG. 8 illustrates the probability distribution function of the mobile device being located indoors and the probability distribution function of the mobile device being located outdoors, for sunny weather and for cloudy weather, for one value of time to sunset. Plot 800a includes the probability distribution for the mobile device being located indoors (810a) and the probability distribution for the mobile device being located outdoors (830a) for sunny weather. Plot 800b includes the probability distribution for the mobile device being located indoors (810b) and the probability distribution for the mobile device being located outdoors (830b) for cloudy weather.

A comparison of plots 800a and 800b illustrates that, for a given value of ALS reading (represented by line 820), the indoor and outdoor probability can be different based on whether the model applied is the "sunny" model or the "cloudy" model. Hence, the classification of the mobile device as indoors or outdoors can depend on the model selected. When information about the weather is contemporaneously retrieved to obtaining the ALS reading, the appropriate model (sunny/cloudy and time to sunset) can be applied to estimate the indoor/outdoor state of the mobile device.

FIG. 9 is a graphical illustration of an example of the use of prior information in indoor/outdoor determination. Graph 900a illustrates the probability distribution function of the probability of the mobile device being indoors (represented by shading 910a) and the probability of the mobile device being outdoors (represented by shading 920a) as the ALS reading varies, as a histogram. Corresponding plot 900b illustrates the probabilities in an X-Y plot using distribution 910b (indoors), distribution 920b (outdoors). In plot 900b, the Y-axis has been normalized for curves 910b and 920b.

In a region surrounding line 930b as shown in plot 900b, such as for ALS readings between 940b and 950b, the determination of the indoor/outdoor states of the mobile device becomes prone to error. In the region between 940b and 950b, the determined state of the mobile device may switch between indoors and outdoors for very small changes of the ALS reading. These frequent changes are not likely to represent actual physical movement of the device rapidly between indoors and outdoors, but rather an artefact of the probabilities of indoors and outdoors being similar for those ALS values.

In regions such as between 940b and 950b, determining whether the mobile device is indoors can be further based on a determination of a previous indoor/ outdoor state of the device. In the example shown in plot 900b, if the device has been determined as indoors once, the state of the device can be classified as indoors until the ALS reading crosses line 950b. If the ALS reading is higher than the value marked by line 950b, the classified state can remain outdoors until the ALS reading turns to lower than the value marked by line 940b. This way a "hysteresis" effect can be incorporated into the IOD to prevent false rapid switching between states.

Having described several embodiments, various modifications, alternative constructions, and equivalents may be used without departing from the disclosure. For example, in some embodiments, a device other than mobile device 100 may include and/or otherwise provide one or more of the components and/or functionalities discussed above, and accordingly may implement one or more embodiments described herein.

In still additional and/or alternative embodiments, the above elements may merely be a component of a larger system, wherein other rules may take precedence over or otherwise modify the application of the invention. Also, a number of steps may be undertaken before, during, or after the above elements are considered. Accordingly, the above description does not limit the scope of the disclosure.

## Claims

1. A method (400) of performing indoor/outdoor detection for a mobile device (100) comprising:
obtaining (410) a sensor reading from a sensor accessible by the mobile device;
obtaining (420) contemporaneous information related to a local condition associated with an area where the mobile device is located;
selecting (430) an indoor/outdoor detection model to apply from a plurality of trained models, the selection based at least in part on the contemporaneous information regarding the local condition;
providing (440) the sensor reading as input to the selected model;
determining (450) a likelihood that a user of the mobile device is located indoors based on the selected model;
classifying (460) the mobile device as indoors or outdoors based on the likelihood.

2. The method of claim 1 wherein the determining the likelihood comprises determining a probability measure that the user of the mobile device is located indoors.

3. The method of claim 1 wherein the trained models are developed using data collected at the mobile device.

4. The method of claim 1 wherein the trained models are updated using data collected at the mobile device.

5. The method of claim 1 wherein information regarding the local condition is expressed as a value chosen from a plurality of possible values, and wherein each model from the plurality of trained models is trained specifically for a different value chosen from the plurality of possible values for the local condition.

6. The method of claim 5 wherein the trained models are updated using data collected at the mobile device; or
wherein the information regarding the local condition comprises a time of day.

7. The method of claim 1 wherein the local condition includes a weather condition, and wherein the sensor comprises an ambient light sensor; or
wherein the determining whether the mobile device is indoors is further based on a determination of a previous indoor/ outdoor state of the device.

8. The method of claim 3 wherein the trained models are developed at the mobile device.

9. The method of claim 3 wherein the trained models are developed at a server; and
wherein the weather condition comprises one or more of the following: temperature, pressure, humidity, sunrise and sunset times, wind speed, wind direction, rain, cloud coverage.

10. The method of claim 1, wherein the sensor comprises a gas sensor, and wherein the local condition includes an amount of volatile organic compounds.

11. The method of claim 1, further comprising determining a second likelihood that a user of the mobile device is located outdoors based on the selected model, and wherein the classifying the mobile device as indoors or outdoors is further based on the second likelihood.

12. A mobile device (100) comprising:
means for obtaining a sensor reading;
means for obtaining contemporaneous information regarding a local condition associated with an area where the mobile device is located;
means for selecting an indoor/outdoor detection model to apply from a plurality of trained models, the selection based at least in part on the contemporaneous information regarding the local condition;
means for providing the sensor reading as input to the selected model;
means for determining a likelihood that a user of the mobile device is located indoors based on the selected model; and
means for classifying the mobile device as indoors or outdoors based on the likelihood.

13. The mobile device of claim 12 wherein the trained models are developed using data collected at the mobile device.

14. The mobile device of claim 12, wherein the means for obtaining a sensor reading senses gas composition, and wherein the local condition includes an amount of volatile organic compounds.

15. A non-transitory computer-readable medium having stored instructions thereon, which when executed by a processor, perform a method of any of claims 1-11.

## Patentansprüche

1. Ein Verfahren (400) zum Durchführen einer Innen-/Außenerfassung für eine mobile Einrichtung (100), das Folgendes aufweist:
Erlangen (410) eines Sensorwerts von einem Sensor, auf den die mobile Einrichtung zugreifen kann;
Erlangen (420) zeitgleicher Information verknüpft mit einem lokalen Zustand, der mit einem Bereich verbunden ist, in dem sich die mobile Einrichtung befindet;
Auswählen (430) eines Innen-/Außenerfassungsmodells, das anzuwenden ist, aus einer Vielzahl von trainierten Modellen, wobei das Auswählen zumindest teilweise auf der zeitgleichen Information über den lokalen Zustand basiert;
Bereitstellen (440) des Sensorwerts als Eingang für das ausgewählte Modell;
Bestimmen (450) einer Wahrscheinlichkeit basierend auf dem ausgewählten Modell, dass sich ein Benutzer der mobilen Einrichtung Innen befindet;
Klassifizieren (460) der mobilen Einrichtung als sich Innen oder Außen befindend basierend auf der Wahrscheinlichkeit.

2. Das Verfahren nach Anspruch 1, wobei das Bestimmen der Wahrscheinlichkeit das Bestimmen eines Wahrscheinlichkeitsmaßes umfasst, dass sich der Benutzer der mobilen Einrichtung Innen befindet.

3. Das Verfahren nach Anspruch 1, wobei die trainierten Modelle unter Verwendung von Daten entwickelt werden, die an der mobilen Einrichtung gesammelt werden.

4. Das Verfahren nach Anspruch 1, wobei die trainierten Modelle unter Verwendung von Daten aktualisiert werden, die an der mobilen Einrichtung gesammelt werden.

5. Das Verfahren nach Anspruch 1, wobei Information über den lokalen Zustand als ein Wert ausgedrückt wird, der aus einer Vielzahl von möglichen Werten ausgewählt wird, und wobei jedes Modell aus der Vielzahl von trainierten Modellen speziell für einen anderen Wert trainiert wird, der aus der Vielzahl von möglichen Werten für den lokalen Zustand ausgewählt wird.

6. Das Verfahren nach Anspruch 5, wobei die trainierten Modelle unter Verwendung von Daten aktualisiert werden, die an der mobilen Einrichtung gesammelt werden; oder
wobei die Information über den lokalen Zustand eine Tageszeit umfasst.

7. Das Verfahren nach Anspruch 1, wobei der lokale Zustand einen Wetterzustand beinhaltet und wobei der Sensor einen Umgebungslichtsensor umfasst; oder
wobei das Bestimmen, ob sich die mobile Einrichtung Innen befindet, ferner auf einem Bestimmen eines vorherigen Innen-/Außenzustands der Einrichtung basiert.

8. Das Verfahren nach Anspruch 3, wobei die trainierten Modelle an der mobilen Einrichtung entwickelt werden.

9. Das Verfahren nach Anspruch 3, wobei die trainierten Modelle an einem Server entwickelt werden; und
wobei der Wetterzustand eine oder mehrere der folgenden Komponenten umfasst: Temperatur, Druck, Feuchtigkeit, Sonnenaufgangs- und Sonnenuntergangszeiten, Windgeschwindigkeit, Windrichtung, Regen, Wolkenbedeckung.

10. Das Verfahren nach Anspruch 1, wobei der Sensor einen Gassensor umfasst und wobei der lokale Zustand eine Menge an flüchtigen organischen Verbindungen beinhaltet.

11. Das Verfahren nach Anspruch 1, das ferner Bestimmen einer zweiten Wahrscheinlichkeit aufweist, dass sich ein Benutzer der mobilen Einrichtung Außen befindet basierend auf dem ausgewählten Modell, und wobei das Klassifizieren der mobilen Einrichtung als sich Innen- oder Außen befindend ferner auf der zweiten Wahrscheinlichkeit basiert.

12. Eine mobile Einrichtung (100), die Folgendes aufweist:
Mittel zum Erlangen eines Sensorwertes;
Mittel zum Erlangen zeitgleicher Information über einen lokalen Zustand, der mit einem Bereich verbunden ist, in dem sich die mobile Einrichtung befindet;
Mittel zum Auswählen eines Innen-/Außenerfassungsmodells, das anzuwenden ist, aus einer Vielzahl von trainierten Modellen, wobei die Auswahl zumindest teilweise auf der zeitgleichen Information über den lokalen Zustand basiert;
Mittel zum Bereitstellen des Sensorwerts als Eingang für das ausgewählte Modell;
Mittel zum Bestimmen einer Wahrscheinlichkeit basierend auf dem ausgewählten Modell, dass sich ein Benutzer der mobilen Einrichtung Innen befindet; und
Mittel zum Klassifizieren der mobilen Einrichtung als sich Innen oder Außen befindend basierend auf der Wahrscheinlichkeit.

13. Die mobile Einrichtung nach Anspruch 12, wobei die trainierten Modelle unter Verwendung von Daten entwickelt werden, die an der mobilen Einrichtung gesammelt werden.

14. Die mobile Vorrichtung nach Anspruch 12, wobei die Mittel zum Erlangen eines Sensorwertes eine Gaszusammensetzung erfassen, und wobei der lokale Zustand eine Menge an flüchtigen organischen Verbindungen beinhaltet.

15. Ein Nichtflüchtiges, computerlesbares Medium mit darauf gespeicherten Anweisungen, die, wenn sie von einem Prozessor ausgeführt werden, ein Verfahren nach einem der Ansprüche 1-11 durchführen.

## Revendications

1. Procédé (400) pour réaliser une détection en intérieur / en extérieur pour un dispositif mobile (100), comprenant :
obtenir (410) une lecture de capteur à partir d'un capteur accessible par le dispositif mobile ;
obtenir (420) des informations contemporaines associées à un état local associé à une région où le dispositif mobile est situé ;
sélectionner (430) un modèle de détection en intérieur / en extérieur à appliquer, parmi une pluralité de modèles ayant subi un apprentissage, la sélection étant basée au moins en partie sur les informations contemporaines concernant l'état local ;
fournir (440) la lecture de capteur en entrée au modèle sélectionné ;
déterminer (450) une probabilité qu'un utilisateur du dispositif mobile soit situé en intérieur sur la base du modèle sélectionné ;
classer (460) le dispositif mobile comme étant en intérieur ou en extérieur sur la base de la probabilité.

2. Procédé selon la revendication 1, dans lequel la détermination de la probabilité comprend la détermination d'une mesure de probabilité que l'utilisateur du dispositif soit situé en intérieur.

3. Procédé selon la revendication 1, dans lequel les modèles ayant subi un apprentissage sont développés en utilisant des données recueillies au niveau du dispositif mobile.

4. Procédé selon la revendication 1, dans lequel les modèles ayant subi un apprentissage sont mis à jour en utilisant des données recueillies au niveau du dispositif mobile.

5. Procédé selon la revendication 1, dans lequel des informations concernant l'état local sont exprimées sous forme d'une valeur choisie parmi une pluralité de valeurs possibles, et dans lequel chaque modèle parmi la pluralité de modèles ayant subi un apprentissage reçoit un apprentissage spécifique pour une valeur différente choisie parmi la pluralité de valeurs possibles pour l'état local.

6. Procédé selon la revendication 5, dans lequel les modèles ayant subi un apprentissage sont mis à jour en utilisant des données recueillies au niveau du dispositif mobile ; ou
dans lequel les informations concernant l'état local comprennent une heure courante.

7. Procédé selon la revendication 1, dans lequel l'état local comprend des conditions météorologiques, et dans lequel le capteur comprend un capteur de lumière ambiante ; ou
dans lequel la détermination si le dispositif mobile se trouve en intérieur est en outre basée sur une détermination d'un état en intérieur / en extérieur précédent du dispositif.

8. Procédé selon la revendication 3, dans lequel les modèles ayant subi un apprentissage sont développés au niveau du dispositif mobile.

9. Procédé selon la revendication 3, dans lequel les modèles ayant subi un apprentissage sont développés au niveau d'un serveur ; et
dans lequel les conditions météorologiques comprennent un ou plusieurs des éléments suivants : température, pression, humidité, heures de lever du soleil et de coucher du soleil, vitesse du vent, direction du vent, pluie, couverture nuageuse.

10. Procédé selon la revendication 1, dans lequel le capteur comprend un capteur de gaz, dans lequel l'état local comprend une quantité de composés organiques volatiles.

11. Procédé selon la revendication 1, comprenant en outre la détermination d'une deuxième probabilité qu'un utilisateur du dispositif mobile soit situé en extérieur sur la base du modèle sélectionné, et dans lequel la classification du dispositif mobile comme étant en intérieur ou en extérieur est en outre basée sur la deuxième probabilité.

12. Dispositif mobile (100), comprenant :
des moyens pour obtenir une lecture de capteur ;
des moyens pour obtenir des informations contemporaines concernant un état local associé à une région où le dispositif mobile est situé ;
des moyens pour sélectionner un modèle de détection en intérieur / en extérieur à appliquer, parmi une pluralité de modèles ayant subi un apprentissage, la sélection étant basée au moins en partie sur les informations contemporaines concernant l'état local ;
des moyens pour fournir la lecture de capteur en entrée au modèle sélectionné ;
des moyens pour déterminer une probabilité qu'un utilisateur du dispositif mobile soit situé en intérieur sur la base du modèle sélectionné ;
des moyens pour classer le dispositif mobile comme étant en intérieur ou en extérieur sur la base de la probabilité.

13. Dispositif mobile selon la revendication 12, dans lequel les modèles ayant subi un apprentissage sont développés en utilisant des données recueillies au niveau du dispositif mobile.

14. Dispositif mobile selon la revendication 12, dans lequel les moyens pour obtenir une lecture de capteur détectent une composition gazeuse, et dans lequel l'état local comprend une quantité de composés organiques volatiles.

15. Support non transitoire lisible par un ordinateur comportant des instructions mémorisées sur lui, instructions qui lorsqu'elles sont exécutées par un processeur, réalisent un procédé selon l'une quelconque des revendications 1 à 11.
